# EUROPEAN PATENT APPLICATION

(11) **EP 4 574 583 A1**
(43) Date of publication of application: **25.06.2025**
(21) Application number: 24217238.5
(22) Date of filing: 03.12.2024
(51) Int. Cl.: B60S 1/34, B60S 1/38

(54) **WINDSHIELD WIPER ASSEMBLY**

(30) Priority: 20.12.2023 IN 202341087293
(71) Applicant: ROSEMOUNT AEROSPACE INC., Burnsville, MN 55306-4898 (US)
(72) Inventor: HITNALLI, Vishwanath, 560023 Bangalore (IN); NOUDURI, Phani Srinivas, 530066 Karnataka (IN)
(74) Representative: Dehns

(57) **Abstract**

A windshield wiper system includes an arm hub connected to a drive shaft, a curved cantilever beam connected to the arm hub, and an elastomeric wiper blade element. The curved cantilever beam has a cross-sectional shape. The elastomeric wiper blade element includes a mounting channel shaped to engage with the cross-sectional shape of the curved cantilever beam such that the elastomeric wiper blade element can be installed on the curved cantilever beam.

## Description

The present disclosure relates generally to windshield wiper systems and, more particularly, to windshield wiper systems for use in aerospace applications.

As well known, windshield wiper systems are used in many applications to clear rain, frozen precipitation, dirt and other debris from windshields. While windshield wiper systems used in aerospace applications (e.g., for various aircraft and helicopters) have this same basic functionality, they have some desirable additional requirements, including but not limited to lower weight and aerodynamic design considerations.

### SUMMARY

One aspect of this disclosure is directed to a windshield wiper system that includes an arm hub connected to a drive shaft, a curved cantilever beam connected to the arm hub, and an elastomeric wiper blade element. The curved cantilever beam has a cross-sectional shape. The elastomeric wiper blade element includes a mounting channel shaped to engage with the cross-sectional shape of the curved cantilever beam such that the elastomeric wiper blade element can be installed on the curved cantilever beam.

Another aspect of this disclosure is directed to a method of installing a windshield wiper system that includes connecting a drive shaft to a drive motor, connecting an arm hub to the drive shaft, securing a curved cantilever beam to the arm hub, and sliding a mounting channel of an elastomeric wiper blade element over the curved cantilever beam. The curved cantilever beam has a cross-sectional shape. The mounting channel is shaped to engage with the cross-sectional shape of the curved cantilever beam.

### BRIEF DESCRIPTION OF THE DRAWINGS

Fig. 1 is schematic view of a prior art windshield wiper system.
Fig. 2 is schematic view of an embodiment of a windshield wiper system of this disclosure.
Fig. 3 is an exploded view of the windshield wiper system of Fig. 2.
Fig. 4 is a close-up view of a portion of the windshield wiper system of Fig. 2 showing a cantilever beam and wiper element.
Fig. 5 is a graphical depiction the initial curvature shape of the cantilever beam of the windshield wiper system of Fig. 2.
Fig. 6 is a schematic view of the windshield wiper system of Fig. 2 depicting the cantilever beam and wiper element is an as-built configuration and an as-installed configuration.
Fig. 7 is another schematic view of the windshield wiper system of Fig. 2 depicting the cantilever beam and wiper element is an as-built configuration and an as-installed configuration.
Fig. 8 is a schematic view of the windshield wiper system of Fig. 2 installed on a representative windshield.

### DETAILED DESCRIPTION

Windshield wiper systems are used in many applications, including terrestrial, nautical, and aerospace applications, to clear rain, frozen precipitation, dirt and other debris from windshields. Terrestrial applications include every type of motor vehicle, rail vehicles, etc. Nautical applications include every type of ship. Aerospace applications include every type of aircraft, including fixed wing and rotary wing aircraft.

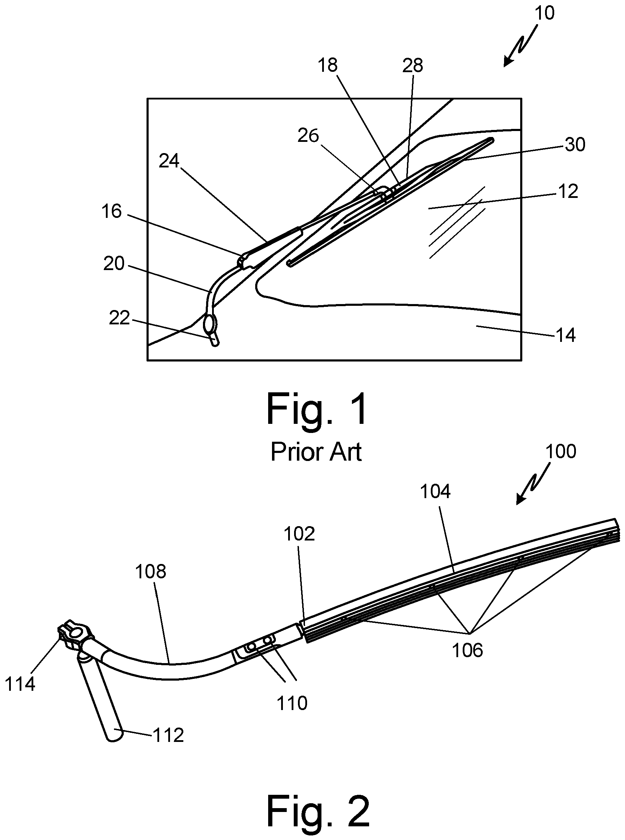

Fig. 1 shows a schematic view of a current windshield wiper system 10 positioned on a windshield 12 of a vehicle 14. The vehicle 14 may any sort of vehicle that can benefit from the functionality of the windshield wiper system 10 as discussed above. The windshield wiper system 10 typically includes a motor converter (not shown), a wiper arm assembly 16, a wiper blade assembly 18, and, optionally, a wash system (not shown). The wiper arm assembly 16 includes a lower arm 20 connected to shaft 22, which in turn is connected to the motor converter (not shown). The lower arm 20 is connected to an upper arm 24 that supports the wiper blade assembly 18. While the connection between the upper arm 24 and the wiper blade assembly 18 can take many forms, in the embodiment shown in Fig. 1 the upper arm 24 connects to the wiper blade assembly 18 at a mid-blade assembly location using a saddle and pin connector means 26. The wiper blade assembly 18 includes a bridge 28 and a wiper blade 30. A desired wiper blade load on the windshield 12 is set by a spring (not shown) in the wiper arm assembly 16. As known, the windshield wiper system 10 should provide sufficient load on the wiper blade assembly 18 to keep the wiper blade 30 in contact with the windshield 12 during all relevant phases of operation to ensure that the wiper blade 30 effectively cleans the windshield 12.

While windshield wiper systems used in aerospace applications have the same basic functionality of any windshield wiper system, they have some desirable additional requirements, including but not limited to lower weight and aerodynamic design considerations. Redesigning the windshield wiper system to reduce part count and simplify wiper blade installation can achieve both goals of decreasing overall windshield wiper system weight and reducing aerodynamic drag.

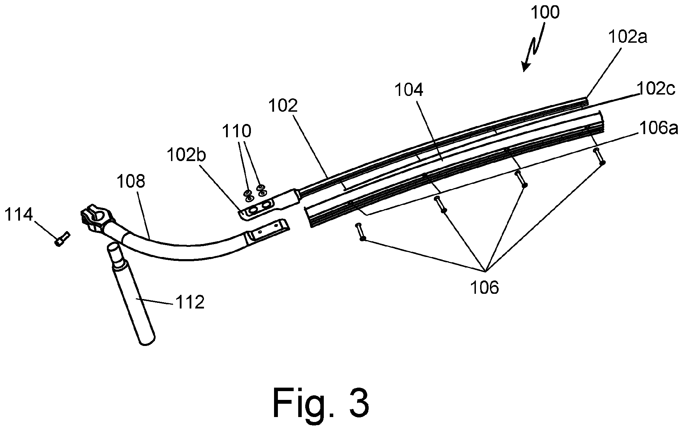

As shown in Fig. 2, such a redesigned windshield wiper system **100** includes a cantilever beam **102** that holds an elastomeric wiper blade element **104.** In this embodiment, the elastomeric wiper blade element **104** acts as a wiping element without having a separate wiper blade assembly as depicted in Fig. 1. The elastomeric wiper blade element **104** is secured to the cantilever beam with blade element fasteners **106.** The blade element fasteners **106** can be rivets as shown in Figs. 2 and 3 or any other suitable fastener known in the art. The cantilever beam **102** is connected to an arm hub **108** using two or more cantilever beam fasteners **110.** The cantilever beam fasteners **110** can be rivets, as shown in Figs. 2 and 3, screws, nut and bolts, or any other suitable fastener known in the art. The arm hub **108** is connected to a drive shaft **112,** which in turn is connected to a drive motor (not shown). Hub fastener **114** secures the arm hub **108** to the drive shaft **112.** The hub fastener **114** can be a screw as shown in Figs. 2 and 3, or any other suitable fastener known in the art. Wiper blade element **104** is configured to slide over or otherwise attach to the cantilever beam **102** and secured to the cantilever beam **102** with the blade element fasteners **106.**

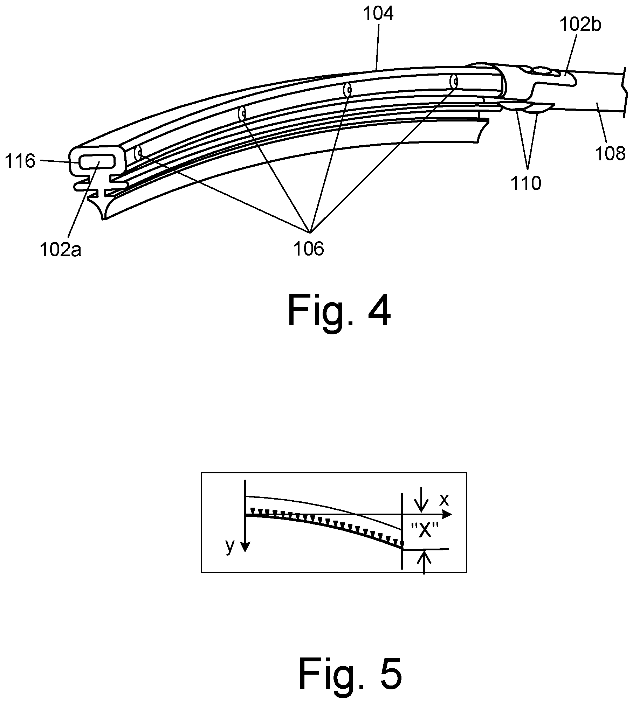

Fig. 3 is an exploded view of the windshield wiper system **100,** showing additional detail of the assembly of the windshield wiper system **100.** Cantilever beam **102** includes a beam section **102a** and a fastener section **102b.** Beam section **102a** is configured to receive the wiper blade element **104** that slides over or is otherwise attached to the cantilever beam **102.** As shown in more detail in Fig. 4, the wiper blade element **104** includes a mounting channel **116** that is shaped to have a snug fit over the beam section **102a.** In the context of this application, "snug fit" means a close fit that permits assembly by hand with limited movement between the wiper blade element **104** and beam section **102a** after assembly. As shown, the mounting channel 116 can conform in shape to the cross-section of the beam section **102a,** such as with a rectangular cross-section or any other cross-section deemed useful for a particular application. As a person of ordinary skill would appreciate, a rectangular cross-section (or a cross-section other than a circular cross-section) can be a mistake proofing feature to support desired alignment of the wiper blade element **104** with regard to the overall windshield wiper system **100** and to act as an anti-rotational feature to prevent the wiper blade element **104** from rotating around the beam section **102a.** In one embodiment, the wiper blade element **104** and the mounting channel **116** extend for the full length of the beam section **102a** so that when the wiper blade element **104** is installed on the beam section **102a,** the mounting channel **116** engages all or substantially all of the beam section **102a.**

As discussed above, the wiper blade element **104** can be secured to the beam section **102a** with blade element fasteners **106.** As shown in Fig. 3, in one embodiment a plurality of blade element fasteners **106** are configured to pass through a corresponding plurality of blade element fastener holes **106a** in the wiper blade element **104** and a corresponding plurality of beam section fastener holes **102c** in the beam section **102a** to secure the wiper blade element **104** to the beam section **102a.** The blade element fasteners **106** can be any type of fastener deemed suitable to keep the wiper blade element **104** attached to the beam section **102a** during all operational conditions while permitting removal at an appropriate time to replace a worn wiper blade element **104** with a new wiper blade element **104.** Similarly, the blade element fasteners **106** can be made from any materials deemed suitable to permit the blade element fasteners **106** to perform their intended function. Although Fig. 3 depicts four blade element fasteners **106,** a windshield wiper system **100** can have more or fewer blade element fasteners as deemed appropriate for a particular application.

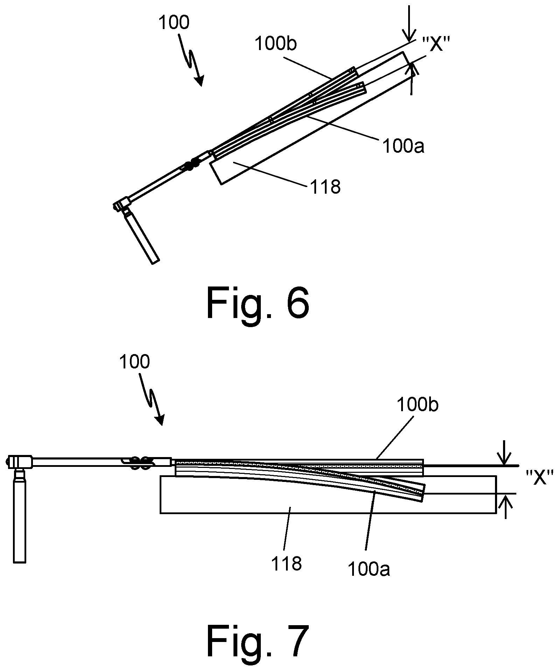

The cantilever beam **102** is designed to be manufactured with a curved shape that is selected to straighten when the windshield wiper system **100** is installed such that the cantilever beam **102** exerts a load sufficient to keep the wiper blade element **104** in contact with a windshield **118** (see Figs. 6, 7, and 8) during all operational conditions. As shown in Fig. 5, the cantilever beam **102** has an initial deflection, "X," that is selected during a design phase to provide a desired blade load after installation with the wiper blade element **104** in the windshield wiper system **100.** The initial curvature shape of the cantilever beam **102** and the slope of the curvature are selected to provide a uniform load distribution along the length of the cantilever beam **102** after installation with the wiper blade element **104** in the windshield wiper system **100.** A person of ordinary skill will know how to select the desired load for the cantilever beam **102** based on the size and shape of the wiper system **100,** including the wiper blade element **104,** and the expected operational conditions for the wiper system **100.**

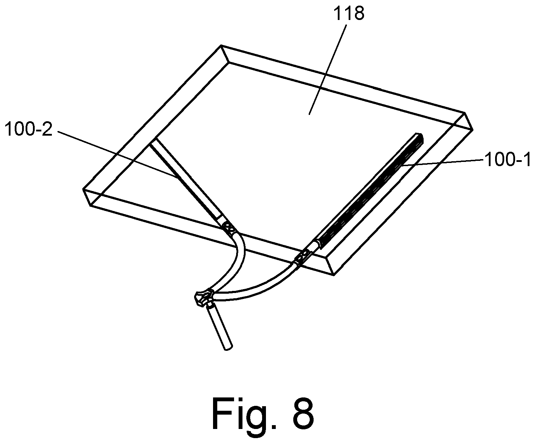

Figs. 6 and 7 show the wiper system **100** in an as built condition **100a** (i.e., with the cantilever beam **102** curved) and in an as installed condition **100b** (i.e., with the cantilever beam straightened and the wiper blade element in contact with the windshield **118**). Both Figs. 6 and 7 show the initial deflection, "X," in the as built condition **100a** versus the as installed condition **100b.** Fig. 8 shows the wiper system **100** in two different operational positions **100-1** and **100-2** as it moves across the windshield **118.**

As discussed above, cantilever beam **102** is manufactured with an initial deflection, "X," that is selected during a design phase to provide a desired blade load after installation with the wiper blade element **104** in the windshield wiper system **100.** Cantilever beam **102** can be made from any material deemed suitable for its intended use-that is a material that can provide the desired blade load and be durable enough to service a desired number of duty cycles when used as intended. Beam section **102a** can be any desired length and, as discussed above, can have any desired cross-sectional shape. Fastener section **102b** can have any design that can securely attach the cantilever beam **102** to the arm hub **108.** For example, fastener section **102b** can have a flat portion that is secured to the arm hub **108** using two or more cantilever beam fasteners **110** as shown in Fig. 3. Alternately, fastener section **102b** can have any other design deemed suitable to secure the cantilever beam **102** to the arm hub **108,** such as a shaped sleeve to fit onto the arm hub **108** or any other suitable design. Depending on the design of fastener section **102b,** any number of cantilever beam fasteners **110** of any design can be used. Depending on the design of fastener section **102b,** the cantilever beam fasteners **110** can be optional or omitted entirely as long as the fastener section **102b** is securely attached to the arm hub **108.**

The elastomeric wiper blade element **104** can be made from any material suitable for its primary intended function, which is to clear rain, frozen precipitation, dirt and other debris windshield **118.** For example, the elastomeric wiper blade element **104** can be made from natural or artificial rubber, a polyurethane material, or any other elastomeric material deem suitable for the application. As discussed above, wiper blade **104** includes mounting channel **116** that is shaped to have a snug fit over the beam section **102a.** As shown in Fig. 4, the mounting channel **116** can conform in shape to the cross-section of the beam section **102a,** such as with a rectangular cross-section or any other cross-section deemed useful for a particular application. The elastomeric wiper blade element **104** is secured to the cantilever beam with blade element fasteners **106.** The blade element fasteners **106** can be rivets as shown in Figs. 2, 3, and 4 or any other suitable fastener known in the art. While Figs. 2, 3, and 4 show four blade element fasteners **106** securing the wiper blade element **104** to the cantilever beam **102,** a person of ordinary skill will appreciate that any number of blade element fasteners **106** can be used. Alternately, depending on the design of the cantilever beam **102** and the wiper blade element **104,** it is conceivable that the windshield wiper system **100** can be constructed without any blade element fasteners **106.**

A person of ordinary skill will appreciate that windshield wiper system **100** can be used for a variety of applications, including but not limited to terrestrial applications (e.g., every type of motor vehicle, rail vehicles, etc.), nautical applications (e.g., every type of ship or vessel), and aerospace applications (e.g., every type of aircraft, including fixed wing and rotary wing aircraft). At least for aerospace applications, it can be desirable to design the windshield wiper system **100** to be aerodynamically efficient to reduce drag related to the windshield wiper system **100** and to support desired operation of the windshield wiper system 100 with airflows associated with aircraft operation.

The windshield wiper system of this disclosure uses the curved structure of the cantilever beam to provide a desired uniform load along the length of the wiper blade element as it engages with the windshield. The disclosed windshield wiper system includes a reduced number of components compared to current windshield wiper systems that rely on a wiper arm assembly to impart a desired load on the wiper blade. Depending on the design of the disclosed windshield wiper system, the length of the combined arm hub and cantilever beam can be particularly useful if the drive shaft and drive motor create a pivot point close to the windshield. The reduced number of components can result a weight reduction compared to current windshield wiper systems. The lower weight of the disclosed windshield wiper system can reduce the torque requirements of the drive motor. The drive motor torque requirements can be further reduced by using an aerodynamically efficient design (i.e., a low drag design) for the windshield wiper system.

### Discussion of Possible Embodiments

The following are non-exclusive descriptions of possible embodiments of the present invention.

A windshield wiper system comprises an arm hub connected to a drive shaft, a curved cantilever beam connected to the arm hub, and an elastomeric wiper blade element. The curved cantilever beam has a cross-sectional shape. The elastomeric wiper blade element includes a mounting channel shaped to engage with the cross-sectional shape of the curved cantilever beam such that the elastomeric wiper blade element can be installed on the curved cantilever beam.

The windshield wiper system of the preceding paragraph can optionally include, additionally and/or alternatively, any one or more of the following features, configurations and/or additional elements:

The windshield wiper system of the preceding paragraph, wherein the curved cantilever beam includes a fastener section configured to secure the curved cantilever beam securely to the arm hub.

The windshield wiper system of the preceding paragraph, wherein the fastener section is configured to engage with two or more cantilever beam fasteners to secure the curved cantilever beam securely to the arm hub.

The windshield wiper system of any of the preceding paragraphs, wherein the mounting channel is configured to provide a snug fit between the elastomeric wiper blade element and the curved cantilever beam.

The windshield wiper system of any of the preceding paragraphs, wherein the elastomeric wiper blade element is secured to the curved cantilever beam with one or more blade element fasteners.

The windshield wiper system of any of the preceding paragraphs, wherein the curved cantilever beam is configured to have a curved shape that is selected to straighten when the windshield wiper system is installed against a windshield such that the curved cantilever beam exerts a load sufficient to keep the wiper blade element in contact with the windshield during all operational conditions.

The windshield wiper system of the preceding paragraph, wherein the curved cantilever beam is further configured to provide a uniform load distribution along a length of the curved cantilever beam.

The windshield wiper system of any of the preceding paragraphs, wherein the windshield wiper system is configured for use in terrestrial applications.

The windshield wiper system of any of the preceding paragraphs, wherein the windshield wiper system is configured for use in nautical applications.

The windshield wiper system of any of the preceding paragraphs, wherein the windshield wiper system is configured for use in aerospace applications.

The windshield wiper system of the preceding paragraph, wherein the windshield wiper system has an aerodynamically efficient design that reduces aerodynamic drag.

A method of installing a windshield wiper system comprises connecting a drive shaft to a drive motor, connecting an arm hub to the drive shaft, securing a curved cantilever beam to the arm hub, and sliding a mounting channel of an elastomeric wiper blade element over the curved cantilever beam. The curved cantilever beam has a cross-sectional shape. The mounting channel is shaped to engage with the cross-sectional shape of the curved cantilever beam.

The method of the preceding paragraph can optionally include, additionally and/or alternatively, any one or more of the following features, configurations and/or additional elements:

The method of the preceding paragraph, wherein the curved cantilever beam includes a fastener section configured to secure the curved cantilever beam securely to the arm hub using two or more cantilever beam fasteners.

The method of any of the preceding paragraphs, wherein the mounting channel is configured to provide a snug fit between the elastomeric wiper blade element and the curved cantilever beam and the elastomeric wiper blade element is secured to the curved cantilever beam with one or more blade element fasteners.

The method of any of the preceding paragraphs, wherein the curved cantilever beam is configured to have a curved shape that is selected to straighten when the windshield wiper system is installed against a windshield such that the curved cantilever beam exerts a load sufficient to keep the wiper blade element in contact with the windshield during all operational conditions.

The method of the preceding paragraph, wherein the curved cantilever beam is further configured to provide a uniform load distribution along a length of the curved cantilever beam.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A windshield wiper system comprising:
an arm hub (108) connected to a drive shaft;
a curved cantilever beam connected to the arm hub (108), wherein the curved cantilever beam has a cross-sectional shape; and
an elastomeric wiper blade element (104), wherein the elastomeric wiper blade element (104) includes a mounting channel shaped to engage with the cross-sectional shape of the curved cantilever beam such that the elastomeric wiper blade element (104) can be installed on the curved cantilever beam.

2. The windshield wiper system of claim 1, wherein the curved cantilever beam includes a fastener section configured to secure the curved cantilever beam securely to the arm hub (108).

3. The windshield wiper system of claim 2, wherein the fastener section is configured to engage with two or more cantilever beam fasteners to secure the curved cantilever beam securely to the arm hub (108).

4. The windshield wiper system of any preceding claim, wherein the mounting channel is configured to provide a snug fit between the elastomeric wiper blade element (104) and the curved cantilever beam.

5. The windshield wiper system of any preceding claim, wherein the elastomeric wiper blade element (104) is secured to the curved cantilever beam with one or more blade element fasteners.

6. The windshield wiper system of any preceding claim, wherein the curved cantilever beam is configured to have a curved shape that is selected to straighten when the windshield wiper system is installed against a windshield such that the curved cantilever beam exerts a load sufficient to keep the wiper blade element (104) in contact with the windshield during all operational conditions.

7. The windshield wiper system of claim 6, wherein the curved cantilever beam is further configured to provide a uniform load distribution along a length of the curved cantilever beam.

8. The windshield wiper system of any preceding claim, wherein the windshield wiper system is configured for use in terrestrial applications, nautical applications, or aerospace applications.

9. The windshield wiper system of claim 8, wherein the windshield wiper system has an aerodynamically efficient design that reduces aerodynamic drag.

10. A method of installing a windshield wiper system, comprising:
connecting a drive shaft to a drive motor;
connecting an arm hub (108) to the drive shaft;
securing a curved cantilever beam to the arm hub (108), wherein the curved cantilever beam has a cross-sectional shape; and
sliding a mounting channel of an elastomeric wiper blade element (104) over the curved cantilever beam, wherein the mounting channel is shaped to engage with the cross-sectional shape of the curved cantilever beam.

11. The method of claim 10, wherein the curved cantilever beam includes a fastener section (102b) configured to secure the curved cantilever beam securely to the arm hub (108) using two or more cantilever beam fasteners.

12. The method of claims 10-11, wherein the mounting channel is configured to provide a snug fit between the elastomeric wiper blade element (104) and the curved cantilever beam and the elastomeric wiper blade element (104) is secured to the curved cantilever beam with one or more blade element fasteners.

13. The method of claims 10-12, wherein the curved cantilever beam is configured to have a curved shape that is selected to straighten when the windshield wiper system is installed against a windshield such that the curved cantilever beam exerts a load sufficient to keep the wiper blade element (104) in contact with the windshield during all operational conditions.

14. The method of claim 13, wherein the curved cantilever beam is further configured to provide a uniform load distribution along a length of the curved cantilever beam.

15. The method of claims 10-14, wherein the windshield wiper system is configured for use in terrestrial applications, nautical applications, or aerospace applications and the windshield wiper system has an aerodynamically efficient design that reduces aerodynamic drag.
